# FASCICULE DE BREVET EUROPEEN

(11) **EP 3 577 206 B1**
(45) Date de publication et mention de la délivrance du brevet: **31.05.2023**
(21) Numéro de dépôt: 18718583.0
(22) Date de dépôt: 05.02.2018
(51) Int. Cl.: C12G 1/00, C12G 1/04, C12H 1/00, C12H 1/02

(54) **PROCÉDÉ DE VINIFICATION EN JUS DÉBOURBÉS**
VERFAHREN ZUR WEINHERSTELLUNG AUS KLAREM SAFT
PROCESS FOR WINE-MAKING FROM CLARIFIED JUICE

(30) Priorité: 03.02.2017 FR 1750915
(43) Date de publication de la demande: 11.12.2019
(73) Titulaire: Biomco, 46140 Albas (FR)
(72) Inventeur: BEAUVILLAIN, Benoit, 46140 Albas (FR)
(74) Mandataire: Plasseraud IP
(86) Numéro de dépôt international: PCT/FR2018/050278
(87) Numéro de publication internationale: WO 2018/142089

(56) Documents cités:
- EP-A1- 2 957 627
- FR-A1- 2 311 843
- FR-A1- 2 952 647

## Description

La présente invention concerne un procédé de vinification. En particulier, la présente invention concerne un nouveau procédé permettant d'obtenir un vin aux qualités gustatives et aux arômes plus raffinés que les vins obtenus par des procédés de vinification classiques.

La transformation du jus de raisin en vin est connue depuis l'antiquité. Les Égyptiens ont été les premiers à représenter les étapes de vendanges, de foulage des grains de raisin puis l'utilisation de grandes jarres en terre cuite pour fermenter le breuvage.

Les procédés de vinification de vins rouges utilisés à l'heure actuelle reprennent ces grandes étapes. Après la récolte des vendanges, les grains sont triés et séparés des rafles ou des morceaux de rafles et autres corps étrangers (c'est l'étape d'égrappage ou d'éraflage) puis sont généralement pressuré (ou foulés) avant d'être mis dans une cuve. Le chapeau de marc, composé des particules solides (essentiellement des pellicules des grains), se forme à la surface et est régulièrement ré-immergé pour rester en contact avec le moût (partie liquide) ; c'est pendant cette étape que se produit la fermentation alcoolique où les sucres du moût sont transformés en alcool et que le vin acquiert ses arômes, ses qualités gustatives et sa couleur. Le marc est ensuite séparé du jus. Il reste alors dans le jus des particules plus ou moins solides appelées bourbes qui doivent être éliminées car ces résidus, majoritairement organiques, ont un effet néfaste pour la qualité du vin et n'apportent aucun avantage. A ce stade, les bourbes sont également mélangées aux lies, des particules fines constituées essentiellement de levures de fermentation mortes. Les éléments constituant les lies vont s'hydrolyser en éléments de plus petite taille et plus solubles, ils vont conférer des qualités au vin : gras, rondeur et affiner la vivacité et les arômes. L'étape de débourbage est nécessaire afin de préserver la qualité du vin en évitant de laisser s'y dégrader de la matière organique. Cette étape ne peut cependant être effectuée qu'une fois le marc retiré. Lors de l'opération de retrait des bourbes dans une vinification classique de vin rouge les lies sont, malheureusement, également éliminées, puisque non séparées des bourbes. Après cette étape, dite de débourbage ou soutirage, le vin subit alors une étape de fermentation malolactique qui entraîne la transformation de l'acide malique en acide lactique. Cette étape sert à diminuer l'acidité du vin et à le stabiliser naturellement.

Ces étapes traditionnelles sont communément utilisées dans la production de l'ensemble des vins rouges partout sur le globe et apporte pleine satisfaction. Toutefois, il existe un besoin permanant d'améliorer les qualités gustatives et la qualité des arômes des vins.

Pour les vins blancs, plus légers que les vins rouges, le marc est évacué au début du procédé et avant la mise en cuve. Débarrassé du marc le moût peut alors être débourbé directement ce qui permet à la fermentation alcoolique de s'effectuer sans les bourbes, les lies peuvent alors être conservées pour donner au vin une plus grande rondeur en bouche et améliorer ses qualités gustatives. C'est le cas de certains vins blancs dits « élevés sur lies ».

Comme il n'est pas possible de débourber un jus qui contient encore le marc, les vins rouges ne peuvent pas bénéficier, à ce jour des avantages d'un débourbage précoce avant la fermentation alcoolique. FR2952647 A1 décrit un procédé de vinification avec notamment une étape de réservation du marc sous atmosphère inerte en présence de sulphite et une étape de réassociation du marc et du moût débourbé dans un seul contenant. EP2957627 A1 décrit un procédé de vinification comprenant une étape selon laquelle un produit débourbé est réassocié avec le marc dans le but d'optimiser l'extraction des composés aromatiques présents dans le marc. Cependant le dit produit est un vin fini et non pas un moût et cette étape intervient à la fin du processus de vinification.

Pour améliorer la vinification et la qualité du vin produit, la présente invention a pour objet un procédé de vinification qui comprend dans l'ordre suivant :
- E1- Une étape de récolte des vendanges,
- E2- Une étape d'égrappage,
- E3- Une étape de pressurage,
- E4- Une étape de séparation du moût et du marc,
- E5- Une étape de réservation du marc sous atmosphère inerte dans un premier contenant (C1),
- E6- Une étape de débourbage du moût dans un second contenant (C2),
- E7- Une étape de réassociation du marc et du moût débourbé dans un seul contenant,
- E8- Une étape de fermentation.

Le présent inventeur a constaté que la protection du marc sous atmosphère inerte dans un premier contenant, permettait de débourber le moût séparément avant de le réintroduire sur le marc pour la fermentation. Par ailleurs, l'inventeur a constaté qu'en préservant le marc de l'oxydation grâce à l'atmosphère inerte, il pouvait être remis en contact avec le moût sans perdre ses propriétés ni altérer la qualité du processus de vinification. Lorsqu'il est exposé à l'air libre, le marc se détériore et perd ses capacités à apporter arômes et corps au vin lors de la fermentation. Traditionnellement, une fois le marc séparé du moût, il est considéré comme un déchet et sa manipulation ne le rend plus propre à être immergé dans le liquide.

Dans un mode de réalisation préférable du procédé selon invention, une étape de sulfitage et un ensemencement par des enzymes de clarification est ajouté lors des étapes E1 et/ou E2.

L'inventeur a constaté qu'il était avantageux de procéder à un ajout d'enzymes et de soufre de manière précoce pour effectuer un débourbage rapide.

Dans un mode de réalisation particulier, les contenants sont des cuves.

Par cuve nous entendons dans la présente demande tout contenant étanche apte à retenir un liquide. Pourront être notamment utilisé, les contenants traditionnellement utilisés dans le monde viticole tel que, par exemple, tonneaux, barriques, foudres, muids ou demi-muid. Les cuves en inox présentent en particulier une bonne étanchéité adaptée à la bonne réalisation de l'invention.

Selon un mode de réalisation particulier, le contenant de l'étape E7 peut être la première ou la deuxième cuve ou une troisième cuve différente des deux premières.

Dans un mode de réalisation préféré, à l'étape E4 le marc est inerté dans une première cuve (C1) et l'étape E6 est réalisée par l'introduction du moût dans ladite première cuve (C1).

L'inventeur a remarqué qu'il était préférable de limiter les manipulations du marc et ainsi réassocier le marc et le moût en introduisant le moût dans la cuve à l'intérieur de laquelle le marc est inerté.

Dans un mode de réalisation préféré, les cuves sont chacune munie d'un couvercle à fermeture étanche.

Grâce à cette fermeture étanche, le marc comme le moût peuvent être préservé de l'oxydation en fermant de manière étanche ces cuves. De manière avantageuse, la fermeture étanche comprendra une soupape de sécurité en cas de départ en fermentation inopiné.

Dans un mode de réalisation particulier de l'invention, on introduit le marc et le moût dans les cuves C1 et C2 directement après leur séparation et l'air des cuves est remplacé par un gaz inerte.

L'avantage de séparer le marc et le moût en les plaçant immédiatement dans deux contenants différents, permet d'éviter toute manipulation du marc ce qui entraînerait sa dégradation. Le marc est alors préservé en remplaçant l'oxygène de l'air contenu dans la cuve par un gaz inerte.

De manière préférentielle, l'étape de réservation du marc se fait sous atmosphère inertée à l'aide d'un mélange à 80% d'argon et 20% de dioxyde de carbone.

L'inventeur a constaté que ce mélange permettait une protection particulièrement efficace contre l'oxydation du marc.

Dans un mode de réalisation particulier, les étapes E3 à E6 se font à une température comprise entre 0 et 10° Celsius.

Le travail à basse température dès le début de la récolte, et plus particulièrement entre les étapes de pressurage et de débourbage permet d'éviter les phénomènes de dégradation et d'altération des qualités du futur breuvage. L'oxydation est notamment peu activée à basse température. De plus, une température comprise entre 0 et 10 degrés Celsius empêche tout départ en fermentation spontanée non voulue à ce stade.

De manière préférentielle, le procédé selon l'invention comprend une étape d'assemblage de différents cépages entre les étapes E7 et E8.

L'inventeur a pu constater que l'assemblage de différents cépages effectués après que chaque cépage a subi les étapes E1 à E6 du présent procédé permet de combiner les qualités et propriétés particulières de chaque cépage.

De manière avantageuse, le procédé selon l'invention comprend en outre une étape supplémentaire E9 d'élevage sur lies.

Les lies sont composées des levures issues de la fermentation alcoolique et parfois aussi de bactéries si le vin a subit une fermentation malolactique. Ces microorganismes subissent une dégradation par autolyse. En se dégradants, les lies libèrent des composés aromatiques ainsi que des molécules qui améliorent les sensations en bouche du vin. L'inventeur a constaté que l'introduction de cette étape, inédite pour les vins rouges, améliore considérablement la qualité et la stabilité du vin.

Par ailleurs, l'inventeur a découvert que le procédé objet de la présente invention pouvait également être appliqué à la vinification des vins blancs en permettant à la fermentation de se faire au moins en partie en présence du marc et de bénéficier ainsi d'un vin d'une plus grande richesse aromatique. Les précurseurs d'arômes se trouvant majoritairement localisés dans la pellicule, donc dans le marc, l'avantage de faire fermenter du jus débourbé de raisin blanc avec leur pellicule augmente considérablement l'intensité et la richesse aromatique du vin.

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :

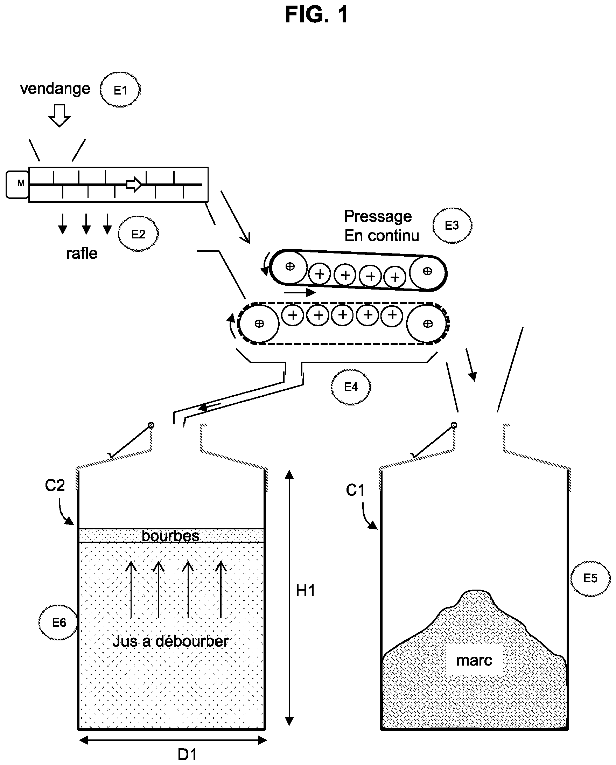

- la figure 1 représente la première partie d'un procédé selon l'invention (étapes E1 à E5).
- La figure 2 représente la seconde partie d'un procédé selon l'invention (étapes E6 et E7).

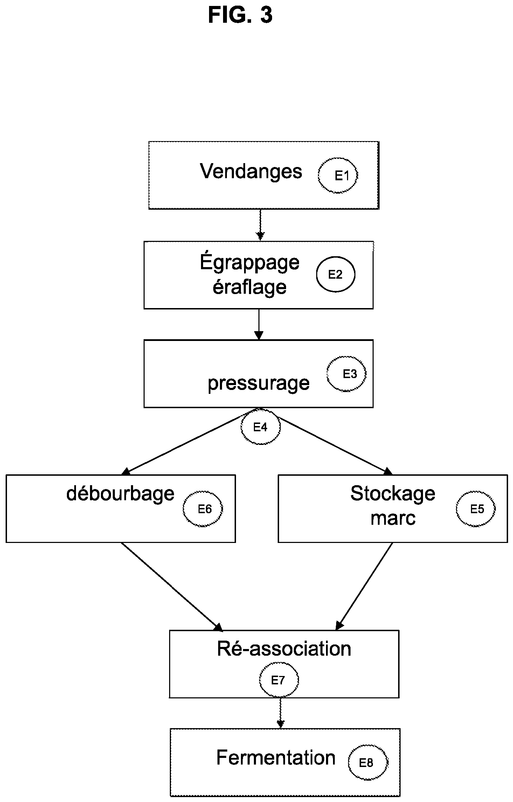

- La figure 3 représente les différentes étapes d'un procédé selon la présente invention.

On décrit en détails dans la suite un mode de réalisation particulier de la présente invention.

Le procédé de vinification du présent exemple comprend plusieurs étapes successives.

Tout d'abord, une étape de récolte des vendanges E1. Cette étape est suivie d'une étape de sulfitage et un ensemencement par des enzymes de clarification. Ces enzymes ne sont naturellement pas totalement absentes du raisin, de la levure ou de la flore microbienne. L'apport d'enzymes exogènes est en général justifié par la faiblesse des niveaux d'activités rencontrés naturellement dans le raisin ou les levures. Cet ajout permet d'accélérer et d'optimiser les phénomènes de vinifications naturels.

Il est ensuite nécessaire de détacher les grains de raisin des rafles. L'égrappage E2 ou éraflage, consiste, pendant ou juste après la vendange, à enlever les rafles ou pédoncules de la grappe pour ne conserver que les baies de raisin. La présence de rafle risque en effet d'apporter au vin des goûts herbacés, végétaux, astringents et amers.

L'égrappage est effectué mécaniquement grâce à un érafloir. Il est réalisé à petit débit afin d'éviter de broyer les grappes, ou de briser les rafles qui pourraient libérer de la sève avec les grains. Un tri plus sélectif peut alors être envisagé afin d'éliminer le reste des corps étrangers tels que des débris végétaux. Ce tri est traditionnellement effectué au moyen d'une table de tri.

Après, survient une étape de pressurage E3 qui permet la séparation du moût et du marc. Les grains sont écrasés et le jus qu'ils contiennent est séparé des parties solides (peau et pépin). Dans l'exemple illustré, on fait appel à un dispositif de pressage en continu composé d'un tapis roulant supérieur et d'une bande perforée roulante inférieure, l'espace de travail qui les sépare diminuant lorsque l'on se déplace dans le sens d'avancement, ce qui provoque le pressage recherché, et le passage du jus au travers des ouvertures de la bande perforée.

À l'issue de cette étape de pressurage, le marc (partie solide) et le moût (partie liquide) sont séparé E4. Le marc se déverse dans une première cuve C1 alors que le moût est acheminé dans une seconde cuve C2.

Les deux cuves présentent une contenance apte à recevoir le jus (moût) et le marc. Elles comprennent un fond dans leur partie inférieure, prolongé par une paroi circulaire et se termine à leur partie supérieure par un goulot d'étranglement muni d'un couvercle étanche. Dans l'exemple représenté, on a illustré des cuves cylindriques ayant par exemple un diamètre D1 compris entre 1 m et 4 m et une hauteur H1 comprise entre 2 m et 5 m.

Ces cuves pourront toutefois être de diverses formes et fabriquées dans un tout autre matériau étanche habituellement utilisé dans les procédés de vinification telle que par exemple : des cuves en béton, tonneaux, barriques, foudres, muids ou demi-muid.

On peut alors remplacer l'oxygène présent dans celles-ci par un mélange à 80% d'argon et 20% de dioxyde de carbone, mélange plus lourd que l'air. Cette manipulation est connue en soi dans le domaine de la vinification et donc elle n'est pas décrite ici en détails. Ainsi, le marc est inerté et préservé de l'oxydation (étape E5), tout comme le moût. D'autres gaz ou mélanges de gaz peuvent être envisagés afin de priver les cuves d'oxygène et empêcher l'oxydation de leur contenu. Le gaz inerte, plus lourd que l'air, va remplir la cuve en commençant par le fonds alors que en même temps, l'air plus léger et chassé par le haut de la cuve. Avantageusement, on utilise ici des cuves munies d'un couvercle à fermeture étanche qui peut alors être refermé. De manière avantageuse, ce couvercle sera muni d'une soupape de sécurité.

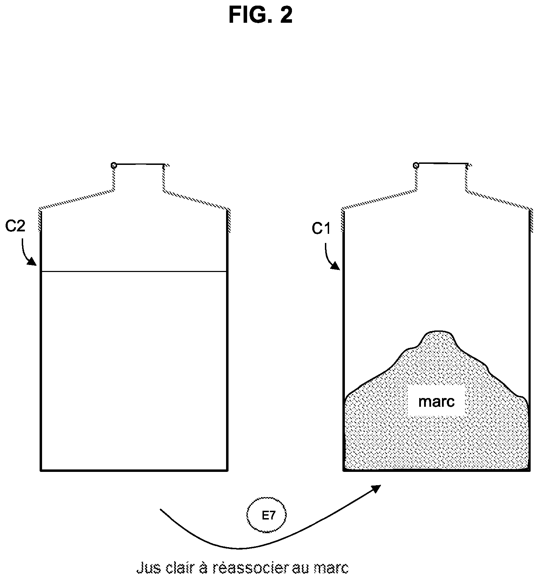

En particulier, le gaz inerte provenant d'autres cuves en fermentation peut être récupéré par un système de pontage. Deux cuves en position fermée hermétiquement étant représentées à la figure 2.

L'étape de débourbage du moût E6 peut alors commencer. Le débourbage s'effectue par flottation, préférentiellement en envoyant un gaz sous pression (généralement CO2) et un liant (idéalement gélatines) dans le moût. Ce gaz peut être introduit par une ouverture à fermeture sélective ménagée dans la partie basse de la cuve. Le gaz peut également être envoyé à travers un tuyau introduit par le sommet de la cuve et débouchant dans le fond de la cuve. Ce mélange entraîne les bourbes et les emporte à la surface. On pourra également débourber le liquide par stabulation à froid, éventuellement à l'aide d'enzymes. Dans ce cas, après l'extraction du jus, des pectines, provenant des grains de raisins et chargées négativement, forment une couche protectrice autour des particules solides chargées positivement, ce qui les maintient en suspension. L'action de dégradation de ces pectines par une enzyme spécifique, la pectinase, permet d'exposer des charges positives sur ces complexes qui floculent avec les pectines pour former des particules de plus grande taille. Lorsque ces particules atteignent une certaine dimension, elles sédimentent et peuvent être éliminées par soutirage.

On peut également envisager de débourber le liquide par filtration.

Survient ensuite une étape de réassociation E7 du marc et du moût débourbé dans la première cuve C1.

Il est plus simple de limiter la manipulation du marc car celui-ci est fragile et se dégrade très rapidement. Le jus débourbé, aussi appelé jus clair, est donc prélevé de la seconde cuve C2 par soutirage pour être remis en contact avec le marc. De manière alternative le marc pourra être introduit dans la seconde cuve C2 ou le jus et le marc pourront tous deux être rassemblés dans une troisième cuve. C'est préférentiellement à cette étape que l'assemblage des différents cépages peut avoir lieu.

Enfin, une étape de fermentation E8 vient finaliser le processus de vinification. La fermentation est le processus chimique naturel pendant lequel le sucre du raisin va se transformer en alcool sous l'action des levures. Des composés synthétisés par la levure que sont les alcools supérieurs, esters d'acide gras, ou encore aldéhydes sont produits parallèlement à la transformation des sucres en alcool. Le bon déroulement de la vinification implique un développement optimal des levures.

On pourra éventuellement poursuivre la fermentation avec une fermentation malolactique qui correspond à la transformation de l'acide malique en acide lactique par l'intermédiaire de bactéries anaérobies appelées bactéries lactiques. Cette étape entraine une diminution de l'acidité. Elle permet également une stabilisation mais aussi un assouplissement du vin. Elle peut se réaliser précocement, c'est-à-dire simultanément à la fermentation alcoolique, ou tardivement dans les mois qui suivent, c'est-à-dire pendant l'élevage. Elle peut donc se faire en cuve, comme en foudre ou en fût.

Les lies sont composées des levures issues de la fermentation alcoolique parfois aussi de bactéries si le vin a subit une fermentation malolactique. L'élevage du vin sur lies fines pourra alors être envisagé, de préférence, avant la fermentation malolactique car les lies de levures sont plus fines que les lies de bactéries. C'est une pratique qui améliore la qualité et la stabilité du vin.

Ces microorganismes subissent une dégradation par autolyse. Cette autolyse peut être favorisée et accélérée par l'ajout d'enzymes telles que les bêta-glucosidases. En se dégradants, les lies libèrent des composés aromatiques ainsi que des molécules qui améliorent les sensations en bouche tels que les polysaccharides. Les vins après élevage sur lies ont un bouquet intense ainsi qu'une saveur plus onctueuse.

Par ailleurs, la stabilisation naturelle sur le plan chimique est accentuée. L'apparition de cristaux de tartre (bitartrate de potassium) dans le fond de la bouteille devient également plus rare. La stabilité vis-à-vis de la précipitation tartrique des vins est accrue du fait de cet élevage sur lies.

Cet élevage sur lies fines n'est, à ce jour, réalisable en vin rouge qu'en utilisant la présente invention.

Les étapes E1 à E6 sont particulièrement sensibles et seront préférentiellement exécutées à une température comprise entre 0 et 10° Celsius. Comme vu précédemment, cette température basse permet notamment de préserver de l'oxydation et d'empêcher tout départ en fermentation spontanée non voulue à ce stade.

Un processus de thermo-vinification peut également s'insérer avantageusement à l'étape E7 en chauffant le jus débourbé au moment de la réincorporation du jus au marc dans le cas de la thermo-vinification en phase liquide. Cette technique consiste à chauffer la vendange à 60-80°C pendant un temps assez court de 6 à 18 heures puis à la refroidir rapidement autour de 20°C. La thermo-vinification appliquée à ce procédé donne des vins encore plus fins et plus fruités que dans un procédé classique.

## Revendications

1. Procédé de vinification **caractérisé en ce qu'**il comprend dans l'ordre suivant :
- E1- Une étape de récolte des vendanges,
- E2- Une étape d'égrappage,
- E3- Une étape de pressurage,
- E4- Une étape de séparation de moût et du marc,
- E5- Une étape de réservation du marc sous atmosphère inerte dans un premier contenant (C1),
- E6- Une étape de débourbage du moût dans un second contenant (C2),
- E7- Une étape de réassociation du marc et du moût débourbé dans un seul contenant,
- E8- Une étape de fermentation.

2. Procédé selon la revendication 1 qui comprend une étape de sulfitage et un ensemencement par des enzymes de clarification lors des étapes E1 et/ou E2.

3. Procédé selon l'une quelconque des revendications précédentes où les premier et second contenants (C1,C2) sont des cuves.

4. Procédé selon la revendication précédente où le contenant de l'étape E7 peut être la première ou la deuxième cuve (C1,C2) ou une troisième cuve différente des deux premières.

5. Procédé selon l'une quelconque des revendications 3 ou 4 où dans l'étape E5 le marc est inerté dans une première cuve (C1) et où l'étape E7 est réalisée par l'introduction du moût dans ladite première cuve (C1).

6. Procédé selon la revendication 3 à 5 où les cuves sont chacune munie d'un couvercle à fermeture étanche.

7. Procédé selon la revendication précédente où on introduit le marc et le moût respectivement dans les première et seconde cuves (C1,C2) directement après leur séparation et où l'air dans les cuves est remplacé par un gaz inerte.

8. Procédé selon l'une quelconque des revendications précédentes où l'étape de réservation du marc se fait sous atmosphère inerté à l'aide d'un mélange à 80% d'argon et 20% de dioxyde de carbone.

9. Procédé selon l'une quelconque des revendications précédentes où les étapes E3 à E6 se font à une température comprise entre 0 et 10° Celsius.

10. Procédé selon l'une quelconque des revendications précédentes qui comprend une étape d'assemblage de différents cépages entre les étapes E7 et E8.

11. Procédé selon l'une quelconque des revendications précédentes qui comprend en outre une étape supplémentaire E9 d'élevage sur lies.

## Patentansprüche

1. Verfahren zur Weinherstellung, **dadurch gekennzeichnet, dass** es in der folgenden Reihenfolge umfasst:
- E1- einen Schritt des Erntens des Leseguts,
- E2- einen Schritt des Abbeerens,
- E3- einen Schritt des Pressens,
- E4- einen Schritt des Trennens von Most und Trester,
- E5- einen Schritt des Aufbewahrens des Tresters unter inerter Atmosphäre in einem ersten Behältnis (C1),
- E6- einen Schritt des Vorklärens des Mostes in einem zweiten Behältnis (C2),
- E7- einen Schritt des Wiederzusammenführens des Tresters und des vorgeklärten Mostes in einem einzigen Behältnis,
- E8- einen Schritt des Gärens.

2. Verfahren nach Anspruch 1, das einen Schritt des Schwefelns und ein Impfen mit Klärungsenzymen bei den Schritten E1 und/oder E2 umfasst.

3. Verfahren nach einem der vorhergehenden Ansprüche, bei dem die ersten und zweiten Behältnisse (C1, C2) Tanks sind.

4. Verfahren nach dem vorhergehenden Anspruch, bei dem das Behältnis des Schritts E7 der erste oder der zweite Tank (C1, C2) oder ein dritter Tank, der von den beiden ersten verschieden ist, sein kann.

5. Verfahren nach einem der Ansprüche 3 oder 4, bei dem im Schritt E5 der Trester in einem ersten Tank (C1) inertisiert wird und bei dem der Schritt E7 durch das Einführen des Mostes in den ersten Tank (C1) ausgeführt wird.

6. Verfahren nach Anspruch 3 bis 5, bei dem die Tanks jeweils mit einem dicht schließenden Deckel versehen sind.

7. Verfahren nach dem vorhergehenden Anspruch, bei dem der Trester und der Most in die ersten beziehungsweise zweiten Tanks (C1, C2) unmittelbar nach ihrer Trennung eingeführt werden und bei dem die Luft in den Tanks durch ein inertes Gas ersetzt wird.

8. Verfahren nach einem der vorhergehenden Ansprüche, bei dem der Schritt des Aufbewahrens des Tresters unter inerter Atmosphäre mithilfe eines Gemisches mit 80 % Argon und 20 % Kohlendioxid stattfindet.

9. Verfahren nach einem der vorhergehenden Ansprüche, bei dem die Schritte E3 bis E6 bei einer Temperatur zwischen 0 und 10 Celsius stattfinden.

10. Verfahren nach einem der vorhergehenden Ansprüche, das einen Schritt des Verschneidens von verschiedenen Rebsorten zwischen den Schritten E7 und E8 umfasst.

11. Verfahren nach einem der vorhergehenden Ansprüche, das ferner einen zusätzlichen Schritt E9 des Ausbaus auf Feinhefen umfasst.

## Claims

1. : A winemaking method **characterized in that** it comprises in the following order:
- E1- A step of harvesting the grapes;
- E2- A step of stripping;
- E3- A step of pressing;
- E4- A step of separating the must and the pomace;
- E5- A step of setting aside the pomace under inert atmosphere in a first container (C1);
- E6- A step of clarifying the must into a second container (C2);
- E7- A step of recombining the pomace and the clarified must in a single container;
- E8- A step of fermenting.

2. : The method according to claim 1 comprising a step of sulfiting and sowing of clarification enzymes during steps E1 and/or E2.

3. : The method according to any one of the preceding claims wherein the first and second containers (C1, C2) are tanks.

4. : The method according to any one of the preceding claims wherein the container for step E7 can be the first or second tank (C1, C2) or a third tank different from the first two.

5. : The method according to any one of claims 3 or 4 wherein in step E5 the pomace is inerted in a first tank (C1) and wherein step E7 is done by adding the must into the first tank (C1).

6. : The method according to any one of claims 3 to 5 wherein the tanks are each provided with a tight closing cover.

7. : The method according to the preceding claim wherein the pomace and the must are respectively put in the first and second tanks (C1, C2) directly after separation thereof and the air in the tanks is replaced by an inert gas.

8. : The method according to any one of the preceding claims wherein the step of setting aside the pomace is done under an atmosphere inerted using a mixture of 80% argon and 20% carbon dioxide.

9. : The method according to any one of the preceding claims wherein the steps E3 to E6 are done at a temperature included between 0 and 10°C.

10. : The method according to any one of the preceding claims comprising a step of assembling various grape varieties between step E7 and E8.

11. : The method according to any one of the preceding claims further comprising an additional step E9 of maturing on the lees.
